(19) Europäisches Patentamt
European Patent Office
Office européen des brevets

(11) **EP 1 008 720 B1**

(12) **FASCICULE DE BREVET EUROPEEN**

(45) Date de publication et mention
de la délivrance du brevet:
**09.02.2005 Bulletin 2005/06**

(51) Int Cl.7: **E21B 49/00**, G06F 19/00

(21) Numéro de dépôt: **99402635.9**

(22) Date de dépôt: **22.10.1999**

(54) **Procédé pour créer un modèle des écoulements de fluides dans un milieu poreux multi-couches fissuré**

Verfahren zur Herstellung eines Modelles für Flüssigkeitsströme in einem porösen Mehrlagenmedium mit Rissen

Method for creating a model for fluid flows in a fractured porous multi-layered medium

(84) Etats contractants désignés:
**GB IT NL**

(30) Priorité: **11.12.1998 FR 9815727**

(43) Date de publication de la demande:
**14.06.2000 Bulletin 2000/24**

(73) Titulaire: **Institut Français du Pétrole**
**92852 Rueil-Malmaison Cedex (FR)**

(72) Inventeur: **Sarda, Sylvain**
**92500 Rueil-Malmaison (FR)**

(56) Documents cités:
**FR-A- 2 757 947**          **FR-A- 2 757 957**

• WARREN J E ET AL: "THE BEHAVIOR OF NATURALLY FRACTURED RESERVOIRS" SPE, vol. 3, no. 3, 1 septembre 1963 (1963-09-01), pages 245-255, XP002058945

## Description

La présente invention concerne une méthode pour simuler des tests de puits sur un modèle discret de réservoir fissuré.

La méthode peut être mise en oeuvre par exemple dans le domaine de la production pétrolière par des ingénieurs de gisement en vue d'obtenir des prédictions d'écoulement fiables.

Il s'agit de simuler un essai de puits dans un milieu poreux perméable (réservoir) traversé par un réseau de fissures beaucoup plus conductrices que la matrice poreuse. Les réservoirs fissurés constituent un type extrême de réservoirs hétérogènes comportant deux milieux contrastés, un milieu matriciel contenant la plus grande part de l'huile en place et présentant une faible perméabilité, et un milieu fissuré représentant moins de 1% de l'huile en place et hautement conducteur. Le milieu fissuré lui-même peut être complexe, avec différents ensembles de fissures caractérisés par leur densité, longueur, orientation, inclinaison et ouverture respectives.

Lors d'un essai de puits, les conditions de débit imposées au puits amènent l'huile contenue dans le réservoir à s'écouler vers le puits. Il s'agit d'un écoulement monophasique (la seule phase mobile est l'huile) et compressible (la roche du réservoir et le fluide huile sont compressibles).

Pour tout volume élémentaire du réservoir, la pression de l'huile contenue dans ce volume obéit, si on ne tient pas compte de la gravité, à l'équation suivante :

$$\phi \cdot C_T \cdot \frac{\partial P}{\partial t} = \mathrm{div}(\frac{K}{\mu} \cdot \nabla P) + Q \qquad (1)$$

où :

    $\phi$ : représente le volume poreux,
    $C_T$, la compressibilité totale (fluide + roche),
    K, la perméabilité de la roche,
    $\mu$, la viscosité du fluide,
    Q, le débit entrant qui est nul partout sauf aux endroits où le puits est en communication avec le réservoir, et
    P, la pression inconnue.

Pour simuler un essai de puits, dans quelque milieu que ce soit, on doit résoudre cette équation dans l'espace et dans le temps. On réalise donc une discrétisation du réservoir (maillage) et la résolution du problème consiste à trouver les pressions des mailles au cours du temps, lui-même discrétisé en un certain nombre de pas de temps.

Dans le cas d'un milieu fissuré, si l'on veut tenir compte de toute la complexité du réseau de fissures, il est nécessaire de réaliser un maillage qui représente correctement ce réseau. Par ailleurs, dans un tel milieu, les perméabilités K sont en général beaucoup plus élevées dans les fissures que dans la matrice et les écoulements sont par conséquents rapides dans les fissures et lents dans la matrice.

## Etat de la technique

Actuellement on utilise des outils de calcul d'écoulements monophasiques mais ils sont appliqués non au milieu géologique réel dans toute sa complexité mais à une représentation homogénéisée, suivant le modèle de réservoir dit de double milieu décrit par exemple par Warren et Root, dans «The Behavior of Naturally Fractured Reservoirs », SPE Journal Septembre 1963. Tout volume élémentaire du réservoir fissuré est ainsi modélisé sous la forme d'un ensemble de blocs parallélépipédiques identiques limités par un système orthogonal de fissures uniformes continues orientées dans la direction de l'un des trois principaux sens d'écoulement (modèle dit de « boite à sucre »). L'écoulement des fluides à l'échelle du réservoir s'effectue à travers le milieu de fissure seulement et des échanges de fluides surviennent localement entre les fissures et les blocs matriciels ne sont pas appliqués au milieu complexe. Cette représentation qui ne rend pas compte de la complexité du réseau de fractures dans un réservoir, se révèle efficace néanmoins mais à l'échelon d'une maille de réservoir ayant typiquement pour dimensions 100m x 100m.

Il est bien préférable cependant d'effectuer les calculs d'écoulement sur le modèle géologique « réel » du milieu et non sur un modèle homogène équivalent, car cela présente le double avantage de permettre :

- de valider l'image géologique du réservoir construite par le géologue à partir de l'ensemble des informations qu'il a pu recueillir sur la fracturation du réservoir (cette validation s'effectuant par comparaison aux données d'essais de puits) ;

- de tester de manière fiable la sensibilité du comportement hydraulique du milieu aux incertitudes sur l'image géologique du milieu fissuré.

Une méthode de modélisation connue consiste à mailler finement le réseau de fissures et la matrice en ne faisant aucune approximation concernant les échanges de fluides entre les deux milieux. Elle est cependant difficile à mettre en oeuvre car la géométrie souvent complexe des espaces entre les fissures rend difficile leur maillage et qu'en tout état de cause, le nombre de mailles à traiter finalement est souvent énorme. La complexité augmente encore s'il s'agit d'un maillage en 3D.

Des techniques de modélisation de milieux poreux fissurés sont décrites dans les brevets FR-A-2.757.947 et FR-A-2.757.957 du demandeur. La première est relative à la détermination de la perméabilité de fissure équivalente d'un réseau de fissures dans un milieu multi-couche souterrain à partir d'une représentation connue de ce réseau, permettant de relier de manière systématique des modèles de caractérisation de réservoir fissuré à des simulateurs double porosité en vue de réaliser une modélisation plus réaliste d'une structure géologique souterraine fissurée.

La deuxième est relative à la modélisation simplifiée d'un milieu géologique hétérogène poreux (tel qu'un réservoir traversé par un réseau irrégulier de fissures par exemple) sous la forme d'un milieu transposé ou équivalent de manière à ce que le milieu transposé soit équivalent au milieu d'origine, relativement à un type déterminé de fonction de transfert physique (connu pour le milieu transposé).

La méthode selon l'invention permet de simuler les écoulements monophasiques dans un milieu fissuré.

La méthode selon l'invention a pour objet pour modéliser les flux de fluides dans un milieu poreux multi-couches fissuré en tenant compte de la géométrie réelle du réseau de fissures et des échanges locaux entre la matrice poreuse et les fissures en chaque noeud du réseau et ainsi de permettre une simulation des interactions entre les variations de la pression et du débit au niveau d'un puits traversant le dit milieu. Elle est caractérisée en ce que l'on discrétise le milieu fissuré par un maillage, dans lequel les mailles de fissure sont centrées sur des noeuds aux différentes intersections des fissures, chaque noeud étant associé à un volume de matrice, et l'on détermine les flux entre chaque maille de fissure et le volume de matrice associé dans un régime de flux semi-permanent.

On délimite par exemple le volume de matrice associé dans chaque couche, à chaque maille de fissure, par l'ensemble des points plus proches du noeud correspondant que de noeuds voisins.

Pour déterminer le volume de matrice associé à chaque maille de fissure, on discrétise par exemple chaque couche fissurée en pixels et on détermine la distance de chaque pixel à la maille de fissure la plus proche.

La valeur de la transmissivité pour chaque couple maille de fissure - bloc matriciel est déterminée par exemple en considérant que la pression varie linéairement en fonction de la distance du point considéré à la maille de fissure associée au bloc.

La méthode selon l'invention simplifie beaucoup le calcul des échanges entre la matrice et les fissures. En effet, il n'y a pas de maillage spécifique de la matrice mais chaque noeud du réseau de fissure est associé à un volume de matrice, et l'écoulement entre chaque noeud fissure et son bloc associé est calculé en régime semi-permanent. L'innovation concerne le calcul du volume de chaque bloc ainsi que du coefficient de proportionalité (appelé transmissivité) qui relie de débit matrice-fissure à la différence de pression matrice-fissure.

• L'avantage majeur de la méthode selon l'invention par rapport à celles opérant sur réseau fissuré réel finement maillé, tient, comme on le verra mieux dans la suite de la description, à la réduction considérable du nombre de mailles centrées sur des noeuds de fissure utilisées pour la résolution de l'équation (1). Le gain en vitesse de simulation par rapport aux méthodes antérieures à maillage fin, on peut le vérifier, est supérieur au simple rapport arithmétique du nombre de mailles utilisé dans les deux cas.

La méthode selon l'invention D'autres caractéristiques et avantages de la méthode selon l'invention, apparaîtront à la lecture de la description ci-après d'un exemple non limitatif de réalisation, en se référant aux dessins annexés où :

- la Fig. 1 montre un exemple de maille de fissure en 2D ;

- la Fig.2 montre un exemple de bloc matriciel obtenu en 2D ;

- la Fig.3 montre une courbe de variation de débit imposée dans un essai de puits ; et

- la Fig.4 montre un exemple de réseau de fissures pour lequel la méthode selon l'invention conduit à une réduction radicale du nombre de mailles à traiter.

**DESCRIPTION DE LA METHODE**

**1) Discrétisation du réseau de fissures**

La méthode comporte un maillage du réservoir fissuré multi-couches tel qu'il est modélisé en utilisant par exemple la technique de modélisation de réservoirs fissurés décrite notamment dans le brevet FR 2.757.947 précité, en admettant que les fissures sont sensiblement perpendiculaires aux limites des couches.

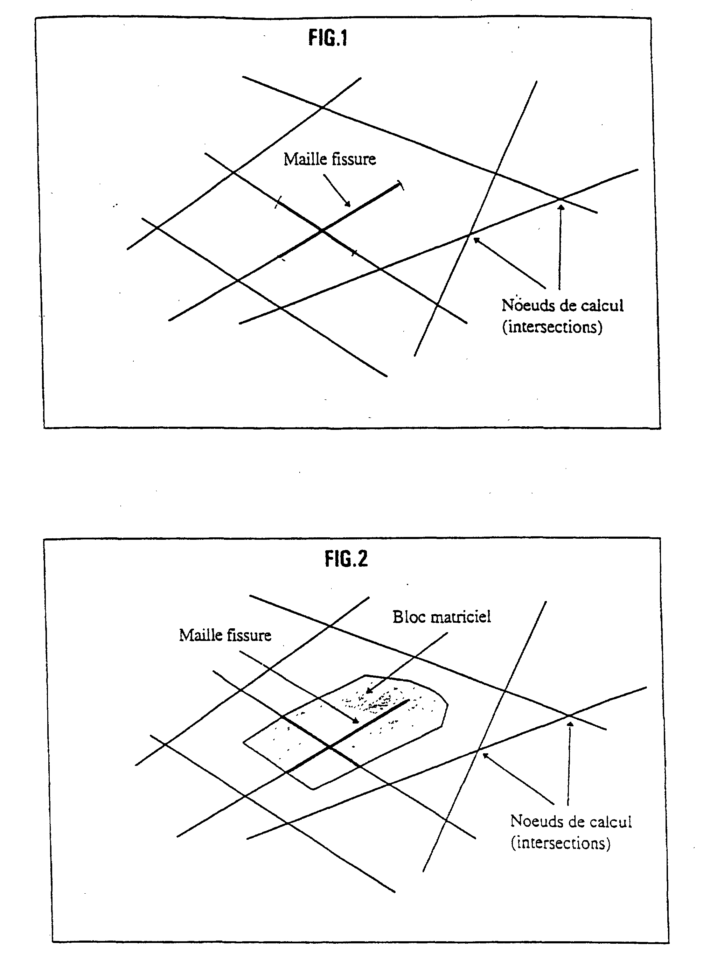

Pour former ce maillage, on repère toutes les intersections de fissures ou noeuds (Fig. 1) et on constitue des mailles de fissure en associant à chaque noeud un bloc matriciel unique. Pour les besoins d'une modélisation en 3D, on est conduit à ajouter des noeuds supplémentaires dans les couches voisines afin de tenir compte des fissures qui en traversent plusieurs. Les noeuds de calcul ainsi définis constituent le centre des mailles de fissure. On fixe comme limites aux mailles, les extrémités des fissures d'une part et le milieu des segments reliant les noeuds de calcul d'autre part. Compte-tenu de ces limites imposées aux mailles, on peut calculer leur volume $\phi$ (cf. relation 1). Le calcul des liaisons entre mailles de fissure (transmissivités) utilisées pour le calcul des flux inter-mailles peut être effectué selon la méthode décrite dans le brevet 2.757.947 précité.

**2) Discrétisation du milieu matriciel**

La discrétisation du milieu matriciel consiste à affecter un volume de roche à chacune des mailles de fissure. Lors de la simulation dynamique, les échanges entre la matrice et les fissures seront calculés en mode semi-permanent (flux d'échange proportionnel à la différence de pression) entre chaque maille fissure et son unique bloc matriciel associé.

Pour le calcul de ces volumes de matrice, on traite le problème couche par couche, ce qui revient à négliger les écoulements verticaux par rapport aux écoulements horizontaux dans la matrice.

Pour une couche donnée, on définit les blocs de la manière suivante :

-   les hauteurs de blocs sont égales et fixées à la hauteur de la couche ;

-   dans le plan de la couche, la surface du bloc associé à une maille fissure est l'ensemble des points plus proches de cette maille fissure que d'une autre.

Physiquement, cette définition suppose que les limites à flux nul dans la matrice sont les lignes d'équidistance entre les mailles de fissure. Cette approximation est valable si les fissures voisines sont à des pressions très proches, ce qui est vrai lorsqu'on est en présence de fissures fortement conductrices par rapport à la matrice.

**a) Géométrie des blocs**

Pour déterminer la géométrie des blocs dans une couche donnée, il s'agit donc de résoudre un problème bi-dimensionnel qui consiste à trouver, pour chaque maille fissure les points les plus proches de cette maille que d'une autre. Ce problème est résolu en utilisant par exemple mais de préférence la méthode géométrique exposée dans l'autre brevet FR 2.757.957 précité, qui permet, en discrétisant la couche fracturée en un ensemble de pixels et en appliquant un algorithme de traitement d'image, de déterminer la distance de chaque pixel à la fracture la plus proche. Dans la phase d'initialisation de cet algorithme, on affect la valeur 0 (distance nulle) aux pixels appartenant à une fracture et une grande valeur aux autres. Si dans cette phase, on donne, de plus, pour chaque pixel de fissure, le numéro de maille de fissure auquel il appartient, le même algorithme permet finalement de déterminer, pour chaque pixel :

•   la distance de ce pixel à la maille fissure la plus proche ;

•   le numéro de la maille fissure la plus proche.

L'ensemble des pixels ayant le même numéro de maille de fissure constitue la surface du bloc matriciel associé à cette maille. En multipliant cette surface par la hauteur de la couche, on obtient le volume du bloc associé à la maille. La Fig.2 montre un exemple de bloc matriciel ainsi obtenu en 2D :

Par construction, la somme des surfaces des blocs est égale à la surface totale de la couche, ce qui garantit qu'on ne rajoute ni n'enlève du volume à la couche.

Pour chaque bloc matriciel, l'algorithme de traitement d'image donne aussi la distance de chaque pixel du bloc à la maille fissure associée. On se sert de cette information pour calculer la transmissivité entre la maille fissure et le bloc matriciel.

**b) Transmissivité matrice-fissure**

Dans l'hypothèse d'un régime semi-permanent où l'on considère que le flux d'échange est proportionnel à la différence des pressions de l'un et l'autre, on a la relation suivante :

$$F_{mf} = \frac{T_{mf}}{\mu} \cdot (P_m - P_f) \qquad (1)$$

où :

$F_{mf}$ est le flux matrice-fissure,
$T_{mf}$, la transmissivité matrice-fissure,
$\mu$, la viscosité,
$P_m$, la pression du bloc matriciel, et
$P_f$, la pression de la maille fissure associée.

Dans l'hypothèse du régime semi-permanent, la valeur de la transmissivité $T_{mf}$ est constante au cours de la simulation. Cette valeur est ici calculée pour chacun des couples maille de fissure - bloc matriciel.

Pour ce calcul, on fait l'hypothèse que dans le bloc matriciel, la pression varie linéairement en fonction de la distance du point considéré à la maille fissure associée au bloc. On définit la transmissivité comme suit :

$$T_{mf} = \frac{2l \cdot H \cdot K}{D} \qquad (2)$$

où :

$l$ est la longueur des fissures dans la maille fissure,
$H$, la hauteur de la couche (et du bloc matriciel),
$K$, la perméabilité de la matrice
$D$, la distance des fissures à laquelle la pression est la pression moyenne du bloc

On connaît $l$, $H$ et $K$ (le facteur 2 vient du fait que la fissure à deux faces). Le calcul de D est fait à partir des informations données par l'algorithme de traitement d'image sur les distances des pixels aux fractures les plus proches. En effet, suivant l'hypothèse de variation linéaire de la pression en fonction de la distance à la fissure, on a :

$$D = \frac{1}{S} \cdot \int_S d(s) \cdot ds \qquad (3)$$

où S est, en 2D, la surface du bloc matriciel et d(s) est la fonction donnant la distance aux fissures des points du bloc matriciel à la maille fissure associée.

En terme de pixels, on a donc simplement :

$$D = \frac{1}{N} \cdot \sum_N d_n \qquad (4)$$

où N est le nombre de pixels du bloc matriciel et $d_n$ la distance du pixel n à la maille fissure.

**3) Représentation des puits**

Un puits est représenté par sa géométrie d'une part et les contraintes de débit qui lui sont imposées au cours du temps d'autre part.

**a) Géométrie**

Un puits est constitué par un ensemble de segments connectés qui intersectent les fractures du réseau. La représentation géométrique d'un puits est donc une ligne brisée en 3D. Certains segments de cette ligne brisée sont en communication avec le réservoir. Les points de communication entre le puits et le réseau sont les points d'intersection de ces segments communicants avec les fractures.

**b) Contraintes de débit**

Les contraintes de débit sont imposées au point où le puits entre dans le milieu fracturé. Elles sont entrées par l'utilisateur sous la forme d'une fonction en plateau donnant le débit en fonction du temps. Les temps de changement de débit du puits indiquent les différentes périodes à simuler.

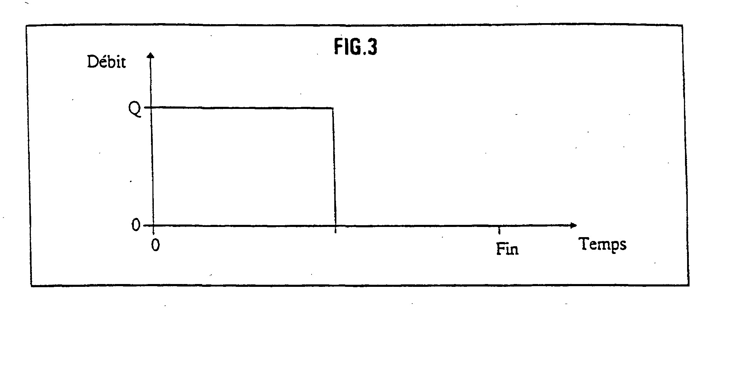

Pour un essai de puits classique (Fig.3), on impose un débit pendant une première période au terme de laquelle on ferme le puits (débit nul) et l'on observe la remontée de pression dans le puits.

**4) Simulation dynamique**

Lors de la simulation dynamique, la période de temps simulée est décomposée en pas de temps dont la durée est comprise pour un essai de puits entre 1 s (juste après l'ouverture ou la fermeture du puits) et quelques heures.

Le passage de l'instant n (auquel on connaît toutes les valeurs de pressions) et l'instant n+1, est réalisé en résolvant dans toutes les mailles et blocs du réservoir, l'équation suivante qui correspond à la relation 1 discrétisée :

$$\phi_i \cdot C_T \cdot \frac{P_i^{n+1} - P_i^n}{t^{n+1} - t^n} + \sum_j \frac{T_{ij}}{\mu} \cdot (P_i^{n+1} - P_j^{n+1}) = Q_i \qquad (5)$$

où :

i, est le numéro de la maille ou du bloc,

j, le numéro de la maille ou du bloc voisin de i,

$P^n$, la pression à l'instant n,

$t^n$, le temps à l'instant n,

$Q_{i,}$ le débit entrant dans i, et

$T_{ij}$, la transmissivité de liaison entre i et j.

A part les pressions, les termes de cette équation sont connus. Les volumes poreux des mailles de fissures et des blocs matriciels ($\phi_i$) sont connus par le maillage, les transmissivités fissure-fissure et matrice-fissure (Tij) sont calculées comme décrit plus haut et les débits ($Q_i$) sont nuls partout sauf aux connexions puits-réservoir où ils sont imposés.

**a) Elimination des inconnues relatives à la matrice**

L'équation (6) peut être résolue par l'inversion d'un système linéaire où les inconnues sont les pressions des mailles de fissure et les pressions des bloc matriciels à l'instant n+1.

Néanmoins, comme chaque maille de matrice n'est reliée qu'à un seul bloc matriciel et que les blocs ne sont pas reliés entre eux, il est possible d'éliminer les inconnues des blocs du système dont la taille est alors divisé par 2.

En effet, pour un bloc matriciel, l'équation (6) s'exprime comme suit :

$$\phi_m \cdot C_{Tm} \cdot \frac{P_m^{n+1} - P_m^n}{t^{n+1} - t^n} + \frac{T_{mf}}{\mu} \cdot (P_m^{n+1} - P_f^{n+1}) = 0 \qquad (6)$$

les indices m et f signifiant respectivement matrice et fissure, et $C_{Tm}$ étant la compressibilité totale de la matrice.

On a $C_{Tm} = c_m + Sw \cdot c_w + (1-Sw) \cdot c_o$, où Sw est la saturation résiduelle en eau dans la matrice, $c_m$ la com-

pressibilité de la matrice, $c_w$ la compressibilité de l'eau et $c_o$ la compressibilité de l'huile, et $\phi_m$ est le volume poreux du bloc matriciel, c'est-à-dire le volume du bloc multiplié par la porosité de la matrice.

On en déduit :

$$P_m^{n+1} = \frac{A_m}{A_m + U_m} \cdot P_m^n + \frac{U_m}{A_m + U_m} \cdot P_f^{n+1} \tag{8}$$

avec :

$$\begin{cases} A_m = \dfrac{\phi_m \cdot C_{Tm}}{t^{n+1} - t^n} \\[2em] U_m = \dfrac{T_{mf}}{\mu} \end{cases}$$

En reportant cette expression dans l'équation concernant la maille de fissure, on obtient :

$$\left[ A_i + \frac{A_m \cdot U_m}{A_m + U_m} + \sum_j U_j \right] \cdot P_i^{n+1} - \sum_j \frac{T_{ij}}{\mu} \cdot P_j^{n+1} = Q_i + A_i \cdot P_i^n + \frac{A_m \cdot U_m}{A_m + U_m} \cdot P_m^n \tag{9}$$

où i est le numéro de la maille de fissure considérée, j, les numéros des mailles fissure connectées à i et m, le numéro du bloc associé à la maille de fissure i.

De plus, on a $A_i = \frac{\phi_i \cdot C_{Tf}}{t^{n+1} - t^n}$ où $C_{Tf}$ est la compressibilité totale de fissure : $C_{Tf} = c_f + c_o$.

La réduction d'un facteur 2 du nombre d'inconnues est un avantage de plus de la présente méthode. Le temps de résolution d'un système linéaire évolue approximativement comme le carré du nombre d'inconnues, par conséquent, l'élimination des inconnues matrice entraîne un gain important dans la vitesse de simulation d'un essai de puits sur un réseau fissuré.

**b) Algorithme de résolution d'un pas de temps**

L'algorithme général de résolution d'un pas de temps consiste à constituer un système linéaire correspondant à l'équation (9) écrite pour toute maille fissure i, à résoudre ce système linéaire et à mettre à jour les inconnues.

Les étapes de cet algorithme sont les suivantes :

- Constitution du système linéaire avec calcul des termes de l'équation (9)
  Calcul de la contribution du milieu fissure
  terme d'accumulation ($A_i$)
  liaison entre mailles fissure ($T_{ij}/\mu$)
  conditions limites puits ($Q_i$)
  Calcul de la contribution du milieu matrice
  terme d'accumulation ($A_m$)
  terme de liaison matrice fissure ($U_m$)

- Résolution du système linéaire (pour trouver les valeurs de pression de fissure à l'instant n+1) par l'algorithme itératif du gradient conjugué (CGS)

- Mise à jour avec le calcul des pressions des blocs matriciels en utilisant l'équation (8), et gestion du pas de temps.

**c) Gestion du pas de temps**

Dans d'une simulation d'essai de puits, les pas de temps sont en général très courts après l'ouverture ou la fermeture du puits, parce que c'est à ces moments que les variations de pressions sont fortes. Plus tard, les pas de temps peuvent être plus longs, lorsque les variations de pressions sont plus faibles.

La gestion du pas de temps consiste à relier la durée du pas de temps n+1 à la variation de pression maximum observée lors du pas de temps n. Pour ce faire, l'utilisateur doit fournir les données suivantes :

Pas de temps initial : $dt_{ini}$
Pas de temps minimal : $dt_{min}$
Pas de temps maximum : $dt_{max}$
Borne inférieure de variation de pression : $dp_{min}$
Borne supérieure de variation de pression : $dp_{max}$
Facteur d'augmentation du pas de temps : rdt+ (>1)
Facteur de réduction du pas de temps : rdt- (<1)

A partir de ces valeurs, la gestion du pas de temps est réalisée comme suit :

A l'instant $t_n$, on calcule le majorant des variations de pressions dans les mailles fissure et les blocs matriciels pendant le pas de temps n (c'est à dire entre les instants $t^{n-1}$ et $t^n$). Suivant la valeur de cette variation de pression dp, le pas de temps est soit :

- augmenté d'un rapport rdt+ si dp < $dp_{min}$,

- diminué d'un rapport rdt- si dp > $dp_{max}$,

- inchangé dans les autres cas.

Après chaque changement de condition de débit au puits, le pas de temps est réinitialisé à la valeur $dt_{ini}$. De plus, une optimisation est réalisée en fin de période de simulation : si tf est le temps à simuler pour atteindre la fin de période et dt le pas de temps prévu, le pas de temps choisi est min($t_{f/2}$,dt).

**5) Données d'entrée de la simulation**

**a) Réseau de fractures**

La géométrie du réseau de fractures ainsi que les attributs des fractures (conductivité, ouverture) sont donnés sou la forme d'un fichier comme dans la méthode décrite dans le brevet FR 2.757.947 précité.

**b) Pétrophysique**

Les données pétrophysiques à fournir sont les suivantes (on indique l'unité entre parenthèse) :

- compressibilité du réseau de fissures ($c_f$ en $bar^{-1}$)

- compressibilité de la matrice ($c_m$ en $bar^{-1}$)

- perméabilité de matrice (K en mD)

- porosité de matrice ($\phi_m$ sans dimension)

Les données en question sont considérées comme homogènes sur le milieu fissuré considéré.

**c) Fluide**

Les données concernant les fluides contenues dans le milieu fissuré concernent l'huile (mobile) et l'eau (immobile) qui est toujours présente en quantité résiduelle dans la matrice :

- saturation résiduelle en eau dans la matrice (Sw sans dimension)

- compressibilité de l'eau ($c_w$ en $bar^{-1}$)

- compressibilité de l'huile ($c_o$ en $bar^{-1}$)

- viscosité de l'huile ($\mu$ en cpo)

**d) Puits**

Les données concernant le puits sont :

- sa géométrie sous la forme d'une série de segments connectés

- les débits imposés sous la forme d'une courbe donnant le débit imposé en fonction du temps.

**e) Gestion du temps**

Les valeurs à fournir sont les valeurs déjà définies dans le chapitre sur la gestion du pas de temps : $dt_{ini}$, $dt_{min}$, $dt_{max}$, $dp_{min}$, $dp_{max}$, rdt+ et rdt.

**Exemple comparatif de maillage**

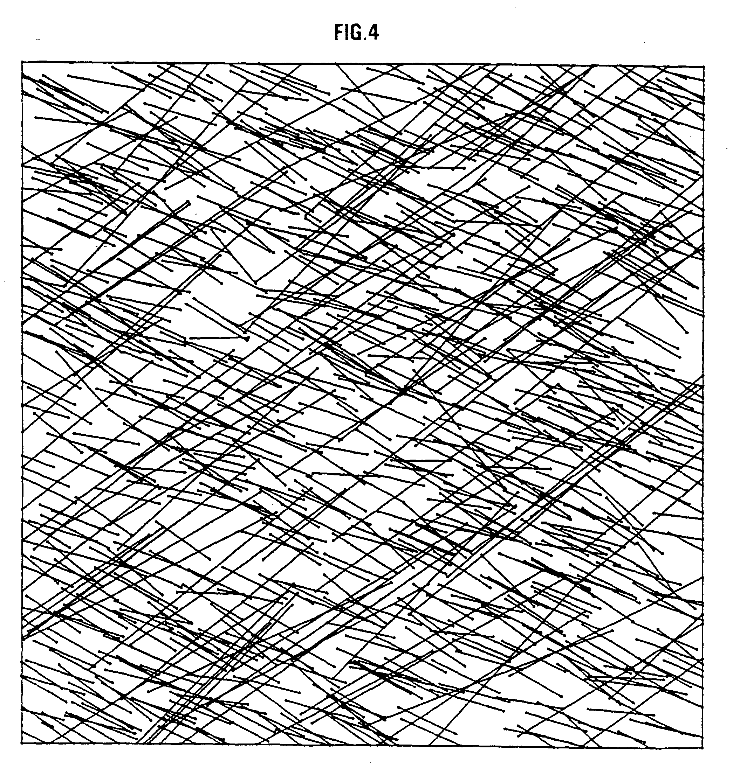

L'exemple comparatif suivant illustre bien la simplification du maillage et le gain corrélatif en temps de calcul des flux, que l'on peut obtenir par la mise en oeuvre de la méthode. A titre de comparaison, on a observé que la zone fissurée représentée à la Fig.4, que l'on aurait maillé normalement avec 80.000 mailles avec les techniques de maillages classiques, peut être maillé ici avec seulement quelque 4000 mailles.

**Revendications**

**1.** Méthode pour modéliser les flux de fluides dans un milieu poreux multi-couches fissuré dans le but de simuler les interactions entre les variations de la pression et du débit au niveau d'un puits traversant le dit milieu, **caractérisée en ce que** l'on discrétise le milieu fissuré par un maillage, dans lequel les mailles de fissure sont centrées sur des noeuds aux différentes intersections des fissures, chaque noeud étant associé à un volume de matrice, et l'on détermine les flux entre chaque maille de fissure et le volume de matrice associé dans un régime de flux semi-permanent.

**2.** Méthode selon la revendication 1, **caractérisée en ce que** le volume de matrice associé à chaque maille de fissure est délimité dans chaque couche par l'ensemble des points plus proches du noeud correspondant que de noeuds voisins.

**3.** Méthode selon la revendication 2, **caractérisée en ce que** l'on discrétise chaque couche fissurée en pixels et on délimite le volume de matrice associé à chaque maille de fissure par une détermination de la distance de chaque pixel à la maille de fissure la plus proche.

**4.** Méthode selon l'une des revendications précédentes, **caractérisée en ce que** l'on détermine la valeur de la transmissivité pour chaque couple maille de fissure - bloc matriciel en considérant que la pression varie linéairement en fonction de la distance du point considéré à la maille de fissure associée au bloc.

**Patentansprüche**

**1.** Verfahren zum Modellieren der Ströme von Fluiden in einem porösen mehrlagigen rissigen Medium mit dem Ziel, die Wechselwirkungen zwischen den Variationen des Drucks und des Durchsatzes auf dem Niveau eines dieses Medium durchquerenden Bohrlochs zu modellieren, **dadurch gekennzeichnet, dass** man das rissige Medium durch ein Netzwerk unstetig macht, in welchem die Maschen von Rissen auf den Knoten der verschiedenen Überkreuzungen der Risse zentriert sind, wobei jeder Knoten einem Matrixvolumen zugeordnet ist und man die Risse zwischen der Masche von Rissen und das Volumen einer zugeordneten Matrix in einem Bereich semipermanenten Stroms bestimmt.

**2.** Verfahren nach Anspruch 1, **dadurch gekennzeichnet, dass** das Matrixvolumen, das mit jeder Masche eines Risses verbunden ist, in jeder Lage durch die Gesamtheit der jedem Knoten nächsten Punkte begrenzt ist, welche den benachbarten Knoten entsprechen.

**3.** Verfahren nach Anspruch 2, **dadurch gekennzeichnet, dass** man jede rissige Lage zu Bildpunkte unstetig macht und man das Volumen einer mit jeder Masche eines Risses verbundenen Matrix durch eine Bestimmung des Abstands von jedem Bildpunkt zur Masche des nächsten Risses begrenzt.

**4.** Verfahren nach einem der vorhergehenden Ansprüche, **dadurch gekennzeichnet, dass** man den Wert der Transmissivität bzw. Durchlässigkeit für jedes Paar - Masche eines Risses/Matrixblock - bestimmt, in dem man berücksichtigt, dass der Druck linear in Abhängigkeit des Abstands des betrachteten Punkts zur Masche eines Risses, die mit dem Block verbunden ist, berücksichtigt.

**Claims**

**1.** Method for modelling the flows of fluids in a fractured multi-layer porous medium with the object of simulating the interactions between the variations in the pressure and the flow in a well passing through said medium, ***characterised in that*** the fractured medium is quantised by mapping in the form of a mesh in which the fracture mesh elements are centred on nodes at the different intersections of the fractures, each node being associated with a volume of matrix, and the flows are determined between each fracture mesh element and the associated volume of matrix in a semi-permanent flow condition.

**2.** Method according to claim 1, ***characterised in that*** the volume of matrix associated with each fracture mesh element is delimited in each layer by the set of points nearer to the corresponding node than neighbouring nodes.

**3.** Method according to claim 2, ***characterised in that*** each fractured layer is quantised in pixels and the volume of matrix associated with each fracture mesh element is delimited by determining the distance of each pixel to the nearest fracture mesh element.

**4.** Method according to one of the preceding claims, ***characterised in that*** the transmissivity value is determined for each fracture mesh element - matrix block pair considering that the pressure varies linearly as a function of the distance of the point concerned to the fracture mesh element associated with the block.

## FIG.1

Maille fissure

Nóeuds de calcul
(intersections)

## FIG.2

Maille fissure

Bloc matriciel

Noeuds de calcul
(intersections)

**FIG.3**

FIG.4